# EUROPÄISCHE PATENTSCHRIFT

(11) **EP 0 954 491 B1**
(45) Veröffentlichungstag und Bekanntmachung des Hinweises auf die Patenterteilung: **03.04.2002**
(21) Anmeldenummer: 97953800.6
(22) Anmeldetag: 12.12.1997
(51) Int. Cl.: B65D 81/26

(54) **VERPACKUNGSMULDE**
PACKAGING TRAY
BAQUET D'EMBALLAGE

(30) Priorität: 06.01.1997 DE 19700154
(43) Veröffentlichungstag der Anmeldung: 10.11.1999
(73) Patentinhaber: Convenience Food Systems Wallau GmbH & Co. KG, 35216 Biedenkopf-Wallau (DE)
(72) Erfinder: FUX, Rudolf, D-35713 Eschenburg (DE)
(74) Vertreter: Wolff, Felix, Dr.
(86) Internationale Anmeldenummer: EP9706991
(87) Internationale Veröffentlichungsnummer: WO9830467

(56) Entgegenhaltungen:
- WO-A-91/13933
- FR-A- 2 545 453
- US-A- 3 040 949
- US-A- 3 346 400
- US-A- 3 409 199

## Beschreibung

Die vorliegende Erfindung betrifft eine Verpackungsmulde geeignet zur dauerhaften Aufnahme von aus einem verpackten Gut austretender Flüssigkeit , die zumindest an und/oder in ihrer Bodenwand zumindest eine zylindrische Ausbuchtung aufweist, die zur Innenseite der Verpackungsmulde hin geöffnet ist und deren über die ganze Höhe der Ausbuchtung konstant bleibender Durchmesser zwischen 2 und 6 mm und deren Höhe das 1,5-fache des Durchmessers beträgt, bzw eine entsprechende Verpackung.

Die vorliegende Erfindung betrifft ferner ein Verfahren zur dauerhaften Trennung eines verpackten Gutes, wie z.B.eines Lebensmittels, von daraus austretender Flüssigkeit, indem man das Gut in einer erfindungsgemäßen Verpackungsmulde verpackt ,die die aus dem verpackten Gut austretende Flüssigkeit in den Ausbuchtungen der erfindungsgemäßen Verpackungsmulde auffängt und hält, wobei das Gesamtvolumen aller Ausbuchtungen in der Verpackungsmulde zumindest dem Volumen der aufzufangenden Flüssigkeit entsprechen muß,bzw ein entsprechend verpacktes Gut.

Der Haltbarmachung von Lebensmitteln kommt in der heutigen Zeit eine immer größere Bedeutung zu. Neben der Konservierung durch Tiefkühlung werden auch immer öfter Lebensmittel in vorzugsweise gasdichten Folien verpackt. Bei dieser Art der Verpackung ist es besonders wichtig, daß die verpackten Güter, wie z.B. Fleisch, Fisch und/oder Gemüse, möglichst vollständig von der Flüssigkeit, die aus diesen während der Lagerung austritt, getrennt wird, weil sich in dieser Flüssigkeit bevorzugt Mikroorganismen vermehren, die den Fäulnisprozeß der verpackten Lebensmittel initiieren.

In der Vergangenheit hat man versucht die Flüssigkeit, wie z.B. Wasser, Blut und/oder Zellplasma, in saugfähigen Fließen, die zwischen dem verpackten Gut und der Verpackungsmulde liegen, aufzusaugen.

Diese Vorgehensweise hat den Nachteil, daß zum einen das verpackte Gut nicht wirklich von der ausgetretenen Flüssigkeit getrennt ist, da das Gut auf dem Fließ liegt, das die Flüssigkeit aufgesaugt hat. Zum anderen ist das mit der Flüssigkeit vollgesaugte Fließ, das oftmals an dem verpackten Gut klebt, für den Verbraucher optisch nicht ansprechend.

Beispielsweise bechreibt die US-A-3,409,199 muldenförmige Behälter mit zylindrischen Ausbuchtungen, wobei jedoch dem Fachmann vermittelt wird, daß die Höhe der Einbuchtungen wenig oder gar keinen Effekt auf das Flüssigkeitsrückhaltevermögen der Ausbuchtungen hat.

Es stellt sich deshalb die Aufgabe, eine Verpackung zur Verfügung zu stellen, die die aus dem verpackten Gut austretende Flüssigkeit auffängt und von dem Verpackungsgut dauerhaft, während der Zeit der Lagerung, getrennt hält und nicht die oben beschriebenen Nachteile aufweist.

Die Aufgabe wird erfindungsgemäß durch die Bereitstellung einer Verpackungsmulde gelöst, die zumindest an und/ oder in ihrer Bodenwand mindestens eine zylindrische Ausbuchtung aufweist, die zur Innenseite der Verpackungsmulde hin geöffnet ist und deren über die gesamte Höhe der Ausbuchtung konstant bleibender Durchmesser zwischen 2 und 6 mm und deren Höhe das 1,5-fache ihres Durchmessers beträgt.

Die Mindestanzahl an Ausbuchtungen wird nach der zu erwartenden Menge der aus dem verpackten Gut austretender Flüssigkeit bemessen. Diese Flüssigkeitsmenge wird anhand der, für den Fachmann gebräuchlichen Methoden zur Bestimmung des Prozentgehaltes an Feuchtigkeit in dem zu verpackenden Gut bestimmt.

Bevorzugt wird das Gesamtvolumen der Ausbuchtungen jedoch um 50-60% größer als das Volumen der erwarteten austretenden Flüssigkeit bemessen, um eine Trennung der Flüssigkeit von dem verpackten Gut sicherzustellen.

In den Ausbuchtungen der erfindungsgemäßen Verpackungsmulde wird die unerwünschte Flüssigkeit durch Kapillarwirkung zurückgehalten.Der maximal mögliche Durchmesser einer Ausbuchtung ist abhängig von der Oberflächenspannung zwischen dem Verpackungsmaterial und der zurückzuhaltenden Flüssigkeit.Diese kann durch bekannte, einfache Messung festgestellt werden.

Bevorzugt werden die Ausbuchtungen in regelmäßigen Abständen an und / oder in der Verpackungsmulde angeordnet, wobei die Ausbuchtungen sowohl an der Bodenwand als auch an den Seitenwänden der Verpackungsmulde angebracht sein können.

Besonders bevorzugt werden die Ausbuchtungen jedoch an und/oder in der Bodenwand der Verpackungsmulde angebracht.

Die Ausbuchtungen können so auch als Füße für die Verpackungsmulde dienen und sind deshalb so anzuordnen, daß die Verpackunsmulde waagerecht auf diesen steht.

Die erfindungsgemäße Verpackungsmulde wird vorzugsweise aus für die Verpackung von Lebensmitteln üblichen, thermoplastischen Polymermaterialien,wie Polypropylenen Polyethylenen, Polyestern, Polycarbonaten ,Polyethylennaphthalaten oder Polystyrolen hergestellt.Tiefziehbare und formstabile Ein- oder Mehrschichtfolien eignen sich ganz besonders zur Herstellung der Verpackungsmulde.

Besonders bevorzugt wird die Verpackungsmulde aus einer geschäumten Folie auf der Basis von Polypropylen hergestellt, wobei ganz besonders bevorzugt ein high melt strength Polypropylen verwendet wird.

High melt strength Polypropylene werden z.B. von der Firma Himont hergestellt und können mit konventionellen Polypropylenen in einem Verhältnis 1:1 gemischt werden

Dem Polypropylen wird gegebenenfalls ein Copolymeres aus Propylen und Ethylen zugemischt werden. Der Ethylen Anteil des Copolymeren liegt zwischen 1 und 10 Gew.%.

Bevorzugt wird die Verpackungsmulde aus einer Mehrschichtfolie hergestellt, die funktionale Schichten enthält. Funktionale Schichten sind zum einen die üblichen Barriereschichten, die eine geringe Sauerstoff-, Stickstoff-, Kohlendioxid- und/oder Wasserdampf-Durchlässigkeit aufweisen, zu anderen auch die geläufigen Siegel- und Haftvermittierschichten.

Ganz besonders bevorzugt wird die Verpackungsmulde aus einer Mehrschichtenbarrierefolie mit dem folgenden Aufbau hergestellt:
A Einer geschäumten Trägerschicht, die aus einer Mischung aus 50 Gew-% eines high melt strength Polypropylen und 50 Gew-% eines konventionellen Polypropylens oder eines Copolymeren aus Propylen und Ethylen hergestellt wird, wobei der Ethylen-Anteil 1-10 Gew-% beträgt. Das Polypropylen wird mit einem chemischen oder physikalischen Treibmittel geschäumt. Die Dicke der geschäumten Schicht liegt zwischen 500 und 800 µm.
B Einer thermoplastischen Haftvermittlerschicht, die die Schichten A und C miteinander verbindet.
C Einer fünfschichtigen Folie, die wie folgt aufgebaut ist:
   - eine Polypropylenschicht,
   - einer Haftvermittlerschicht,
   - einer Barriereschicht hergestellt aus Polyethylenvinylalkohol (mit ca. 35 Gew-% Vinylalkohol),
   - einer Haftvermittlerschicht,
   - einer Siegelschicht hergestellt aus Polyethylene niederer Dichte (LDPE) oder einer peelfähigeh Siegelschicht hergestellt aus einer Mischung aus LDPE und Polybutylen.

Die durch Thermoverformung, vorzugsweise durch Tiefziehen hergestellten, erfindungsgemäßen Verpackungsmulden werden nach dem Befüllen vorzugsweise mit bekannten Deckelfolien verschlossen. Diese können Mehrschichtfolien mit einer Schichtenfolgen wie zum Beispiel Polyethylenterephthalat (PET) Polyvinylidenchlorid (PVDC)/Klebstoff/LDPE oder PET/Klebstoff//PE/Haftvermittler/EVOH/Haftvermittler/PE sein.

Besonders eignen sich als Deckelfolien Folien mit dem Aufbau PET/SiOx//Klebstoff/LDPE. Diese Folie zeichnet sich durch eine besonders gute Transparenz und eine hohe Knickbruchfestigkeit aus. Die damit versiegelte Packungsmulde hat eine besonders gute Gasbarriere.

Mit der erfindungsgemäßen Verpackungsmulde ist es möglich, das Verpackungsgut von daraus austretender, meist wässriger, Flüssigkeit dauerhaft zu separieren und damit das Verpackungsgut auch bei Höherer Lagerung trocken zu halten.

Gegenstand der vorliegenden Erfindung ist deshalb auch ein Verfahren zur dauerhaften Trennung eines verpackten Gutes von der daraus austretenden Flüssigkeit ,indem man das Gut in einer erfindungsgemäßen Verpackungsmulde verpackt, in deren Ausbuchtungen die austretende Flüßigkeit aufgefangen und darin gehalten wird, wobei das Gesamtvolumen der Ausbuchtungen zumindest dem Volumen der aufzufangenden Flüssigkeit entsprechen muß.

Bevorzugt wird das Gesamtvolumen der Ausbuchtungen jedoch um >50% bemessen als das erwartete Volumen der aus dem verpackten Gut austretenden Flüssigkeit.

Das Volumen der aus dem verpackten Gut austretenden Flüssigkeit kann aufgrund der Menge, der Art und der Qualität des verpackten Gutes abgeschätzt werden. Für eine genauere Bestimmung der aufzufangenden Flüssigkeitsmenge können bekannte Methoden, z.B. aus der Lebensmittelchemie zur Bestimmung des Feuchtigkeitsgehaltes, herangezogen werden.

In der erfindungsgemäßen Verpackung kann vorzugsweise Fleisch (frisch), Fisch und/oder Gemüse dauerhaft getrennt von der austretenden Flüssigkeit,die meist wäßrig wie z.B. Wasser, Blut und/oder Zellplasma, ist, verpackt gelagert werden.

Die erfindungsgemäße Verpackung hat somit u. a. den Vorteil, daß das verpackte Gut von der daraus austretenden Flüssigkeit dauerhaft getrennt bleibt. Dadurch sind die Verpackungen bzw. die verpackten Güter optisch ansprechender und Höher haltbar.

Beispiele der erfindungsgemäßen Verpackungsmulde und deren Vorteile bzw deren Herstellung sollen anhand der folgenden Figuren erläutert werden:
**Figur 1a** zeigt eine erfindungsgemäße Verpackungsmulde mit einem verpackten Gut in Seitenansicht und in **Figur 1b** die Verpackungsmulde ohne Verpackungsgut in Draufsicht .
**Figuren 2-3** zeigen eine Anordnung zur Herstellung einer erfindungsgemäßen Verpackungsmulde durch Thermoverformung **(Figur 2)** bzw. durch Thermoverformung in Kombination mit einer Vakuumexpansion **(Figur 3)**.

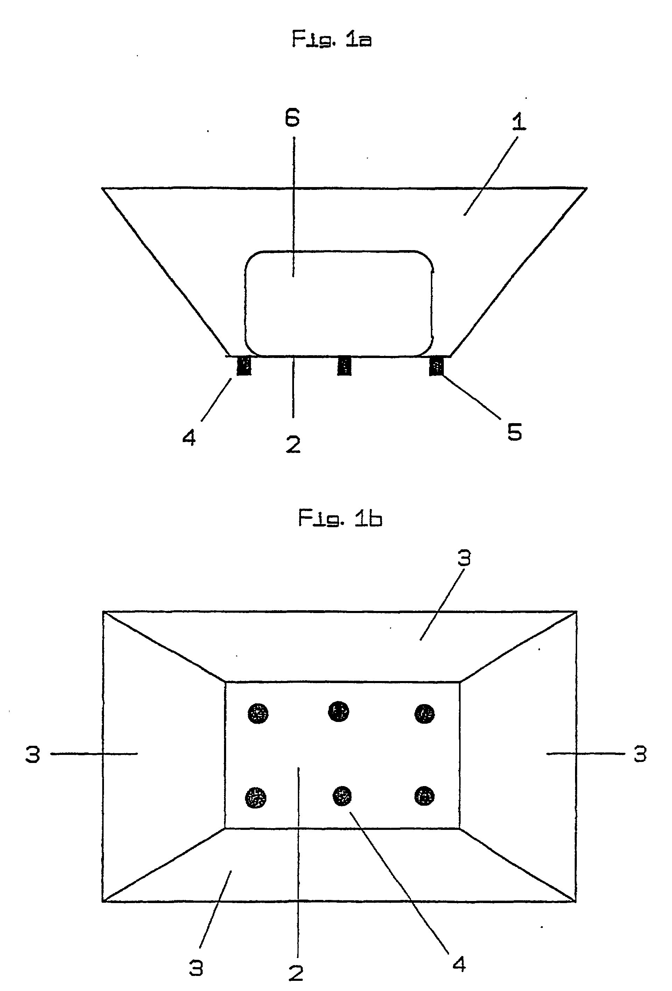

In **Figur 1a** wird eine erfindungsgemäße Verpackungsmulde **(1)** bestehend aus einer Bodenwand **(2)** und vier Seitenwänden **(3)** dargestellt. An der Bodenwand **(2)** befinden sich zylindrische Ausbuchtungen **(4)**, die zur Innenseite der Verpackungsmulde hin geöffnet sind. In den Ausbuchtungen **(4)** befindet sich die Flüssigkeit **(5)**, die das verpackte Gut **(6)** während der Lagerung abgegeben hat. In **Figur 1b** wurde die Verpackungsmulde ohne verpacktes Gut **(6)** dargestellt.

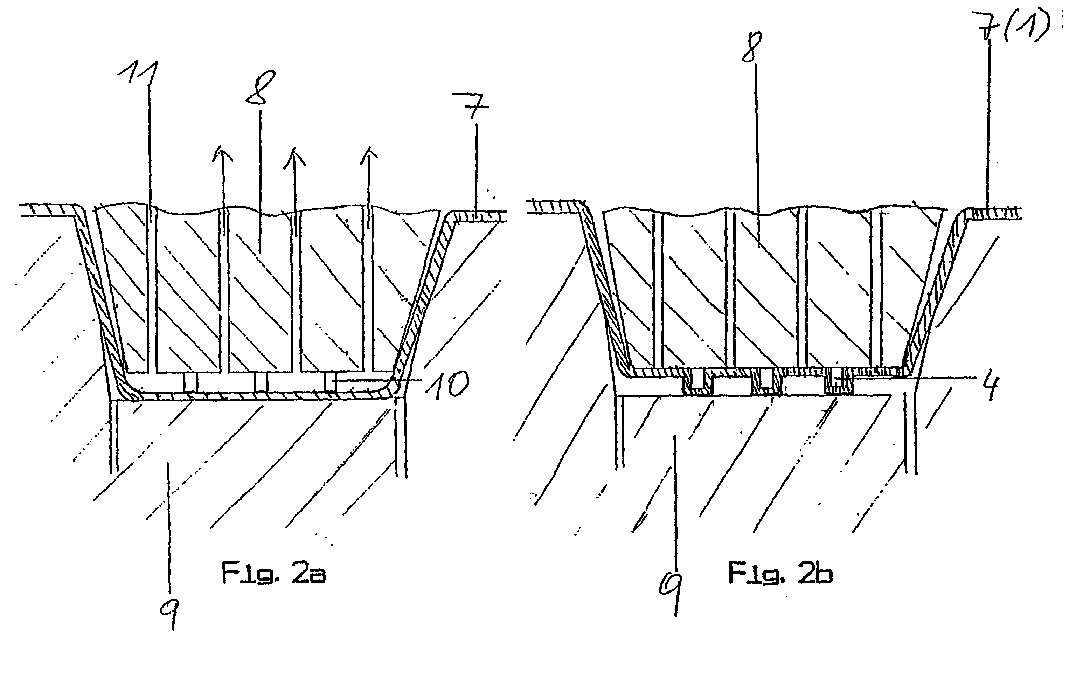

**Figur 2** zeigt die Herstellung einer erfindungsgemäßen Verpackungsmulde gemäß **Figur 1**, in der Bodenwand in regelmäßigen Abständen zylindrische Ausbuchtungen aufweist. Diese Mulde wird aus einer Mehrschichtverpackungsfolie **(7)** durch Thermoverformung zwischen den beiden Werkzeugen **(8)** und **(9)** hergestellt, von denen das Werkzeug **(8)** das die Innenseite der Verpackungsmulde formt an seiner Unterseite in regelmäßigen Abständen zylindrische Erhebungen **(10)** aufweist. In **Figur 2a** wird die Thermoverformung gezeigt, bei der die Verpackungsmulde zwischen den zwei Werkzeugen **(8)** und **(9)** geformt wird. Durch die Kanäle **(11)** im Werkzeug **(8)** wird Vakuum angelegt, so daß sich die erwärmte Folie um die Erhebungen auf dem Werkzeug **(8)** formt und damit in der Bodenwand der Verpackungsmulde die Ausbuchtungen entstehen wie in **Figur 2b** dargestellt ist. Die üblichen Maßnahmen dieser Vakuumthermoverformung sind Stand der Technik.

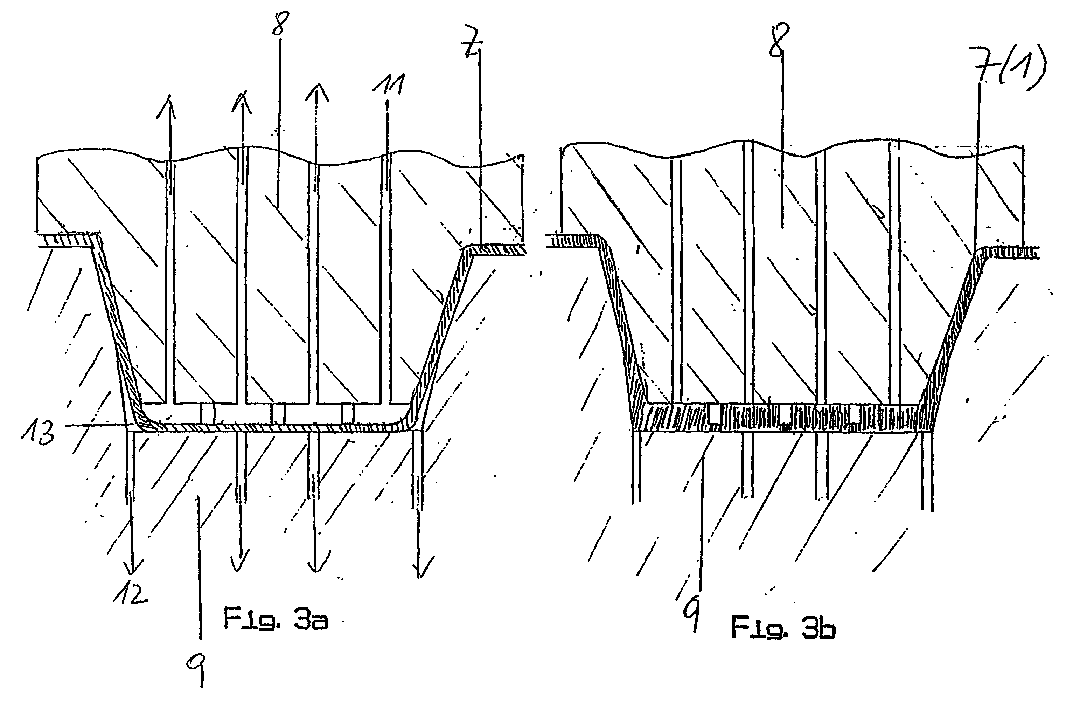

In **Figur 3** wird die Herstellung einer erfindungsgemäßen Verpackungsmulde durch Thermoverformung kombiniert mit Vakuumexpansion dargestellt. Zu diesem Zweck muß die Mehrschichtverpackungsfolie, aus der die Mulde hergestellt wird, zumindest eine Schicht aus einem verschäumten thermoplastischen Material, wie z.B. aus verschäumtem Polypropylen, aufweisen. Wie in **Figur 3a** dargestellt, wird die Verpackungsfolie **(7)** zwischen den beiden Werkzeugen **(8)** und **(9)** zur Herstellung der Verpackungsmulde durch Thermoverformung eingelegt. Durch Anlegen eines Vakuums in den Kanälen **(11)** und/oder auch **(12)** in den beiden Werkzeugen **(8)** und **(9)** kann die geschäumte Schicht, wo die Vakuumbeaufschlagung erfolgt, verbreitet werden. Dabei muß durch thermoplastische Material zumindest so hoch erwärmt werden, daß es durch Plastifizierung verformt werden kann. Insbesondere durch Evakuierung des Spaltes **(13)** zwischen den beiden Werkzeugen **(8)** und **(9)** kann sich die verschäumte Folie im Bodenbereich der herzustellenden Verpackungsmulde ausdehnen und den gesamten Hohlraum zwischen den beiden Werkzeugen ausfüllen, wodurch durch die Erhebungen **(10)** auf dem Werkzeug **(8)** die Ausbuchtungen in der Bodenwand der erfindungsgemäßen Verpackungsmulde hergestellt werden.

Abhängig vom Verpackungsmaterial und den Thermoverformungsparametern ist es möglich, Verpackungsmulden herzustellen, deren Aussehen zwischen dem in **Figur 2b** und **Figur 3b** liegt. Abhängig davon, ob ein Verpackungsmaterial mit wenigstens einer verschäumten Schicht und ob ein Vakuum an einer oder beiden Seiten des Werkzeuges angelegt wird, erfolgt eine mehr oder weniger große Ausdehnung der verschäumten Folie, wodurch die Ausbuchtungen entweder in dem Verpackungsmaterial verbleiben oder mehr oder weniger aus der Bodenwand und ggfs. aus den Seitenwänden herausragen.

Darüber hinaus ist es auch möglich, die erfindungsgemäßen Verpackungsmulden durch Spritzgießen in eine entsprechende Form nach bekannten Spritzgußmethoden herzustellen.

## Patentansprüche

1. Verpackungsmulde (1) geeignet zur dauerhaften Aufnahme von aus einem verpackten Gut (6) austretender Flüssigkeit (5), **dadurch gekennzeichnet, daß** die Verpackungsmulde (1) zumindest an und / oder in ihrer Bodenwand (2) zumindest eine zylindrische Ausbuchtung (4) aufweist, die zur Innenseite der Verpackungsmulde hin geöffnet ist und deren über die Gesamthöhe der Ausbuchtung konstant bleibender Durchmesser zwischen 2 und 6 mm und deren Höhe das 1,5-fache des Durchmessers beträgt.

2. Verpackungsmulde gemäß Anspruch 1, **dadurch gekennzeichnet, daß** die Anzahl und/oder das Gesamtvolumen der Ausbuchtungen (4) zumindest nach dem Volumen der austretenden Flüssigkeit bemessen ist.

3. Verpackungsmulde gemäß Anspruch 2, **dadurch gekennzeichnet, daß** die Ausbuchtungen (4) in regelmäßigen Abständen an deren Bodenwand angeordnet sind.

4. Verpackungsmulde gemäß den Ansprüchen 1-3, **dadurch gekennzeichnet, daß** die Verpackungsmulde (1) aus einem thermoplastischen Verpackungsmaterial besteht.

5. Verpackungsmulde gemäß Anspruch 4, **dadurch gekennzeichnet, daß** das Verpackungsmaterial eine Einschicht- oder Mehrschichtfolie, vorzugsweise eine geschäumte Folie auf Basis von Polypropylen ,ist.

6. Verpackungsmulde gemäß Anspruch 5, **dadurch gekennzeichnet, daß** das Polypropylen ein high melt strength Polypropylen ist.

7. Verpackungsmulde gemäß den Ansprüchen 5-6, **dadurch gekennzeichnet, daß** die Folie eine Mehrschichtfolie mit funktionalen Schichten ist.

8. Verpackung bestehend aus der Verpackungsmulde gemäß den Ansprüchen 1-7 und einem Deckel.

9. Verpackung gemäß Anspruch 8, **dadurch gekennzeichnet, daß** der Deckel aus einer Folie ,vorzugsweise einer Mehrschichtfolie mit funktionalen Schichten besteht.

10. Verpacktes Gut, dauerhaft getrennt von der aus dem verpackten Gut austretenden Flüßigkeit, **dadurch gekennzeichnet ,daß** das Gut in einer Verpackung gemäß den Ansprüchen 8-9 verpackt ist.

11. Verfahren zur dauerhaften Trennung eines verpackten Gutes von daraus austretender Flüssigkeit, **dadurch gekennzeichnet, daß** man das Gut in einer Verpackungsmulde (1) gemäß den Ansprüchen 1-7 verpackt ,die die aus dem verpackten Gut austretende Flüßigkeit in ihren Ausbuchtungen auffängt und hält, wobei das Gesamtvolumen aller Ausbuchtungen zumindest dem Volumen der aufzufangenden Flüssigkeit entspricht.

12. Verfahren gemäß Anspruch 11, **dadurch gekennzeichnet, daß** das Gesamtvolumen aller Ausbuchtungen das 1,5-fache des Volumens der aufzufangenden Flüssigkeit entspricht.

13. Verfahren gemäß Anspruch 11 oder 12, **dadurch gekennzeichnet, daß** als Gut Lebensmittel, bevorzugt Fleisch, Fisch und/oder Gemüse verpackt werden.

## Claims

1. A packaging tray (1) suitable for permanently holding liquid (5) exuding from a packaged article (6), **characterized in that** the packaging tray (1) has at least on and/or in its base wall (2) at least one cylindrical bulge (4) which is open towards the interior of the packaging tray, the diameter of which, remaining constant over the entire depth of the bulge, being between 2 and 6 mm, and the depth of which being 1.5 times the diameter.

2. The packaging tray according to claim 1, **characterized in that** the number and/or the total volume of the bulges (4) corresponds at least to the volume of exuding liquid.

3. The packaging tray according to claim 2, **characterized in that** the bulges (4) are arranged at regular spacings on the base wall thereof.

4. The packaging tray according to claims 1-3, **characterized in that** the packaging tray (1) consists of a thermoplastic packaging material.

5. The packaging tray according to claim 4, **characterized in that** the packaging material is a single-layer or multilayer film, preferably a foamed film on the basis of polypropylene.

6. The packaging tray according to claim 5, **characterized in that** the polypropylene is a high melt strength polypropylene.

7. The packaging tray according to claims 5-6, **characterized in that** the film is a multilayered film having functional layers.

8. A package, consisting of the packaging tray according to claims 1-7 and a cover.

9. The package according to claim 8, **characterized in that** the cover consists of a film, preferably a multilayered film having functional layers.

10. A packaged article, permanently separated from liquid exuding from the packaged article, **characterized in that** the article is packaged in a package according to claims 8-9.

11. A method of permanently separating a packaged article from liquid exuding therefrom, **characterized in that** the article is packaged in a packaging tray (1) according to claims 1-7 which collects and holds the liquid exuding from the packaged article in its bulges, the total volume of the overall bulges corresponding at least to the volume of the liquid to be collected.

12. The method according to claim 11, **characterized in that** the total volume of the overall bulges corresponds to 1.5 times the volume of the liquid to be collected.

13. The method according to claim 11 or 12, **characterized in that** foodstuffs are packaged as articles, preferably meat, fish and/or vegetables.

## Revendications

1. Barquette d'emballage (1) appropriée pour recueillir de manière durable le liquide (5) sortant d'une marchandise emballée (6), **caractérisée en ce qu'**elle comporte au moins sur et/ou dans son fond (2) au moins un saillant cylindrique (4), qui est ouvert vers le côté intérieur de la barquette d'emballage, dont le diamètre constant sur toute la hauteur du saillant est de 2 à 6 mm, et dont la hauteur est égale à 1,5 fois le diamètre.

2. Barquette d'emballage selon la revendication 1, **caractérisée en ce que** le nombre et/ou le volume total des saillants (4) est dimensionné au moins en fonction du volume de liquide sortant.

3. Barquette d'emballage selon la revendication 2, **caractérisée en ce que** les saillants (4) sont disposés à intervalles réguliers dans le fond.

4. Barquette d'emballage selon les revendications de 1 à 3, **caractérisée en ce que** la barquette d'emballage (1) est constituée d'un matériau d'emballage thermoplastique.

5. Barquette d'emballage selon la revendication 4, **caractérisée en ce que** le matériau d'emballage est une feuille monocouche ou multicouche, de préférence une feuille expansée à base de polypropylène.

6. Barquette d'emballage selon la revendication 5, **caractérisée en ce que** le polypropylène est du polypropylène à haute résistance en fusion.

7. Barquette d'emballage selon les revendications de 5 à 6, **caractérisée en ce que** la feuille est une feuille multicouche comportant des couches fonctionnelles.

8. Emballage composé d'une barquette d'emballage selon les revendications de 1 à 7 et d'un couvercle.

9. Emballage selon la revendication 8, **caractérisé en ce que** le couvercle consiste en une feuille, de préférence une feuille multicouche comportant des couches fonctionnelles.

10. Marchandise emballée, séparée de façon durable du liquide sortant de cette marchandise emballée, **caractérisée en ce que** la marchandise est emballée dans un emballage selon les revendications 8 - 9.

11. Procédé de séparation durable d'une marchandise emballée et du liquide en sortant, **caractérisé en ce que** l'on emballe la marchandise dans une barquette d'emballage (1) selon les revendications de 1 à 7, qui recueille et retient le liquide sortant de la marchandise emballée dans ses saillants, dans laquelle le volume total de tous les saillants est au moins égal au volume du liquide à recueillir.

12. Procédé selon la revendication 11, **caractérisé en ce que** le volume total de tous les saillants est égal à 1,5 fois le volume du liquide à recueillir.

13. Procédé selon la revendication 11 ou 12, **caractérisé en ce que** la marchandise emballée est un produit alimentaire, de préférence de la viande, du poisson et/ou des légumes.
